# EUROPÄISCHE PATENTSCHRIFT

(11) **EP 2 562 530 B1**
(45) Veröffentlichungstag und Bekanntmachung des Hinweises auf die Patenterteilung: **08.08.2018**
(21) Anmeldenummer: 12180772.1
(22) Anmeldetag: 17.08.2012
(51) Int. Cl.: G01M 15/02, F02B 29/04

(54) **Vorrichtung zur Versorgung eines Verbrennungsmotors auf einem Prüfstand mit zumindest einem Nutzmedium**
Device for supplying a combustion engine on a test bench with at least one usable medium
Dispositif d'alimentation d'un moteur à combustion interne sur un banc d'essai avec au moins un fluide d'exploitation

(30) Priorität: 22.08.2011 AT 12052011
(43) Veröffentlichungstag der Anmeldung: 27.02.2013
(73) Patentinhaber: AVL List GmbH, 8020 Graz (AT); Le Moteur Moderne, S.A. LMM - member of the AVL group, 91127 Palaiseau Cedex (FR)
(72) Erfinder: Chan, Louis, 91140 Villebon sur Yvette (FR); Le Sommer, Philippe, 91190 Gif sur Yvette (FR); Schleifer, Karol, 8111 Judendorf (AT)
(74) Vertreter: Patentanwälte Pinter & Weiss OG

(56) Entgegenhaltungen:
- EP-A2- 1 342 893
- WO-A1-2009/036889
- AT-A2- 507 937
- DE-B3- 10 319 867

## Beschreibung

Die Erfindung betrifft eine Vorrichtung zur Versorgung eines Verbrennungsmotors auf einem Prüfstand mit zumindest einem fluidischen, konditionierten, insbesondere gekühlten, Nutzmedium, beispielsweise Verbrennungsluft oder Ladeluft, umfassend zumindest einen dem Verbrennungsmotor vorgeschalteten Kühler für das jeweilige Nutzmedium, wobei der Kühler als Wärmetauscher ausgeführt ist, der mit einem gasförmigen Kühlmedium betrieben wird.

Zur Luftversorgung eines Verbrennungsmotors, der als Prüfling auf einem Prüfstand vorgesehen ist, mit Verbrennungsluft sind bereits viele verschiedene Konfigurationen vorgeschlagen worden. Dabei soll in den meisten Fällen sichergestellt sein, dass dieses Nutzmedium Verbrennungsluft in bestimmter Weise konditioniert ist, vorzugsweise gekühlt, allenfalls auch druckkonditioniert.

Beispielsweise offenbart die WO 2009/036889 A1 eine Vorrichtung zur Ladeluftkühlung eines Verbrennungsmotors mit zwei Ladeluftkühlern in einem Fahrzeug. Der erste Ladeluftkühler ist herkömmlich ausgeführt, z.B. als Luft-/Luft-Ladeluftkühler und der zweite Ladeluftkühler weist einen Wärmetauscher auf, der zur Kühlung der Ladeluft mit Kühlmittel eines Kühlmittelkreislaufs der Innenraumklimatisierung beaufschlagbar ist. Die Vorrichtung ist speziell für den Fahrzeugeinsatz vorgesehen.

Den Ladeluftkühler in einem Wasserbecken anzuordnen, wie diese in vielen Anlagen praktiziert wird, erlaubt nur eine sehr träge Einstellung der Ladelufttemperatur und ist somit nicht für sehr dynamische Prüfläufe geeignet. Auch die verbesserte Version mit Sprühköpfen, wie z.B. in der AT 507 937 A2 offenbart ist, die von der Ladeluft durchströmte Kühler mit Kühlwasser besprühen, hat immer noch eine für sehr dynamische Prüfläufe zu hohe Trägheit in der Temperatureinstellung.

Die DE 103 19 867 B3 offenbart eine Klimatisierungseinrichtung zur Klimatisierung eines Raums mit einer Mischkammer, in der Raumluft des zu klimatisierenden Raums mit gekühlter Luft gemischt wird und die gemischte Luft wieder in den Raum rückgeführt wird. Die Klimatisierungseinrichtung ist relativ träge und daher nicht für die Anforderungen eines Motorprüfstands geeignet.

Die Aufgabe der vorliegenden Erfindung war daher eine verbesserte Vorrichtung, die eine hochdynamische Nachführung zumindest der Temperatur eines Nutzmediums für eine Verbrennungskraftmaschine gestattet.

Zur Lösung dieser Aufgabe ist die Vorrichtung erfindungsgemäß dadurch gekennzeichnet, dass das Kühlmedium dem Kühler über eine Konditioniereinrichtung für das Kühlmedium zugeführt wird, wobei die Konditioniereinrichtung einen Wärmetauscher, eine dynamische Stellvorrichtung zur Einstellung des Volumen-bzw. Massenstroms des Kühlmediums und ein Gebläse für das Kühlmedium aufweist. Für den bevorzugten Fall der Ladeluft der Verbrennungskraftmaschine als Nutzmedium ergibt sich eine Situation wie im realen Fahrzeug, bei dem der Ladeluftkühler durch den Fahrtwind gekühlt wird, wobei aber am Prüfstand durch die Konditioniereinrichtung die Kühlwirkung beeinflusst bzw. vorgegeben werden kann.

Die dynamische Stellvorrichtung kann entsprechend einer vorteilhaften Ausführungsform durch eine Venturi-Düse mit verstellbarem Querschnitt gebildet sein.

Vorzugsweise ist ein in Achsrichtung verstellbarer Regelkolben in der Venturi-Düse vorgesehen.

Eine weitere Ausführungsform der Erfindung ist dadurch gekennzeichnet, dass die Stellvorrichtung mit einem Regelsystem gekoppelt ist, das die Einstellung des Volumen-bzw. Massenstroms des Kühlmediums auf Kennfeldbasis vornimmt.

Dabei können im Regelsystem Abläufe abgespeichert sein, die eine Konditionierung des Nutzmediums entsprechend realistischen Fahrprofilen mittels der Einrichtung zur variablen Aufteilung, nötigenfalls auch unter Einbeziehung der Einrichtung zur zusätzlichen Konditionierung und/oder der Einrichtung zur Beeinflussung der Strömung, bewirken.

Vorteilhafterweise weist die Konditioniereinrichtung eine Heiz- und/oder Kühleinrichtung für das Kühlmedium auf.

In der nachfolgenden Beschreibung soll die Erfindung anhand eines bevorzugten Ausführungsbeispiels und unter Bezugnahme auf die beigefügten Zeichnungen näher erläutert werden.

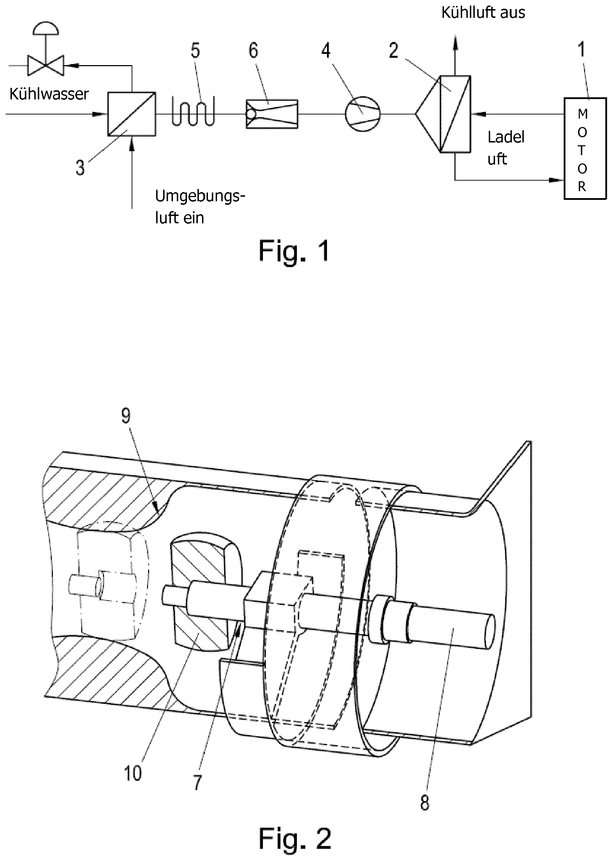

Dabei zeigt die Fig. 1 eine schematische Darstellung eines Ausführungsbeispieles einer erfindungsgemäßen Vorrichtung, und die Fig. 2 zeigt einen erfindungsgemäßen Regelkolben.

Die in Fig. 1 dargestellte Vorrichtung sieht zur Versorgung eines Verbrennungsmotors 1 auf einem Prüfstand mit beispielsweise konditionierter Ladeluft einen Ladeluftkühler 2 vor, der dem auch im Fahrzeug vorgesehenen Kühler entspricht. Dieser Ladeluftkühler 2 ist dabei also vorzugsweise als Luft-Luft-Wärmetauscher ausgeführt. Die als gasförmiges Kühlmedium verwendete Luft wird dem Ladeluftkühler 2 des Verbrennungsmotors 1 über eine vorgeschaltete Konditioniereinrichtung zugeführt, die neben einem vorzugsweise mit Kühlwasser (von links in der Zeichnung kommender Kreis) betriebenen Wärmetauscher 3 für die aus der Um -gebung angesaugte Luft (in der Zeichnungsfigur durch den nach oben weisenden Pfeil symbolisiert) ein Gebläse 4 für das Kühlmedium aufweist. Gegebenenfalls ist auch eine Heiz- und/oder Kühleinrichtung 5 vorgesehen.

Vorteilhafterweise umfaßt die Konditioniereinrichtung auch eine dynamische Stellvorrichtung 6 zur Einstellung des Volumen-bzw. Massenstroms des Kühlmediums Luft. Diese Stellvorrichtung 6 kann beispielsweise eine dynamische Klappe sein oder alternativ auch durch eine Venturi-Düse mit verstellbarem Querschnitt gebildet sein. Die Querschnittsverstellung könnte durch einen in Achsrichtung verstellbaren Regelkolben 7 in der Venturi-Düse vorgesehen, wie er beispielhaft in Fig. 2 zu sehen ist.

Der Regelkolben 7 besteht aus einem Stellantrieb 8, beispielsweise einem elektrischen oder hydraulischen Aktuator, der axial im sich erweiternden Abschnitt 9 der Venturi-Düse montiert ist. An der Spitze des Stellantriebs 8 ist ein strömungsgünstig geformter, abgerundeter Kopf 10 montiert, der in axialer Richtung der Venturi-Düse durch den Stellantrieb 8 verstellbar ist, wobei - wie durch die transparentere Darstellung mit dem Kolben in der Zeichnungsfigur 2 ganz linken Stellung symbolisiert ist - auch der komplette Verschluß der Venturi-Düse möglich ist.

Die Stelleinrichtung 6 ist vorteilhafterweise mit einem Regelsystem gekoppelt, das die erforderliche Luftmenge als Kühlmedium für den Ladeluftkühler 2 auf Kennfeldbasis vornimmt. Vorzugsweise sind in diesem Regelsystem darüber hinaus Abläufe abgespeichert, die eine Luftmengenbestimmung entsprechend realistischen Fahrprofilen bewirken.

## Patentansprüche

1. Vorrichtung zur Versorgung eines Verbrennungsmotors auf einem Prüfstand mit zumindest einem fluidischen, konditionierten, insbesondere gekühlten, Nutzmedium, beispielsweise Verbrennungsluft oder Ladeluft, umfassend zumindest einen dem Verbrennungsmotor (1) vorgeschalteten Kühler (2) für das jeweilige Nutzmedium, wobei der Kühler (2) als Wärmetauscher ausgeführt ist, der mit einem gasförmigen Kühlmedium betrieben wird, **dadurch gekennzeichnet, dass** das Kühlmedium dem Kühler über eine Konditioniereinrichtung für das Kühlmedium zugeführt wird, wobei die Konditioniereinrichtung einen Wärmetauscher (3), eine dynamische Stellvorrichtung zur Einstellung des Volumen-bzw. Massenstroms (6) des Kühlmediums und ein Gebläse (4) für das Kühlmedium aufweist.

2. Vorrichtung nach Anspruch 1, **dadurch gekennzeichnet, dass** die dynamische Stellvorrichtung (6) durch eine Venturi-Düse mit verstellbarem Querschnitt gebildet ist.

3. Vorrichtung nach Anspruch 2, **dadurch gekennzeichnet, dass** ein in Achsrichtung verstellbarer Regelkolben (7) in der Venturi-Düse vorgesehen ist.

4. Vorrichtung nach einem der Ansprüche 1 bis 3, **dadurch gekennzeichnet, dass** die Stellvorrichtung (6) mit einem Regelsystem gekoppelt ist, das die Einstellung des Volumen-bzw. Massenstroms des Kühlmediums auf Kennfeldbasis vornimmt.

5. Vorrichtung nach Anspruch 4, **dadurch gekennzeichnet, dass** im Regelsystem Abläufe abgespeichert sind, die eine Konditionierung des Nutzmediums entsprechend realistischen Fahrprofilen mittels der Einrichtung zur variablen Aufteilung, nötigenfalls auch unter Einbeziehung der Einrichtung zur zusätzlichen Konditionierung und/oder der Einrichtung zur Beeinflussung der Strömung, bewirken.

6. Vorrichtung nach einem der Ansprüche 1 bis 5, **dadurch gekennzeichnet, dass** die Konditioniereinrichtung eine Heiz- und/oder Kühleinrichtung (5) für das Kühlmedium aufweist.

## Claims

1. A device for supplying an internal combustion engine, located on a test bench, with at least one fluid, conditioned, in particular cooled, use medium, for example combustion air or charge air, said device comprising at least one radiator (2) for the relevant use medium, which radiator is arranged upstream of the internal combustion engine (1), the radiator (2) being formed as a heat exchanger operated using a gaseous cooling medium, **characterized in that** the cooling medium is supplied to the radiator by a conditioning means for the cooling medium, the conditioning means comprising a heat exchanger (3), a dynamic adjustment mechanism for adjusting the volumetric flow rate or mass flow rate (6) of the cooling medium, and a fan (4) for the cooling medium.

2. The device according to claim 1, **characterized in that** the dynamic adjustment mechanism (6) is formed by a Venturi nozzle having an adjustable cross section.

3. The device according to claim 2, **characterized in that** a control piston (7) that can be adjusted in the axial direction is provided in the Venturi nozzle.

4. The device according to any of claims 1 to 3, **characterized in that** the adjustment mechanism (6) is coupled to a control system which adjusts the volumetric flow rate or mass flow rate of the cooling medium on the basis of a characteristic map.

5. The device according to claim 4, **characterized in that** sequences are saved in the control system, which sequences cause the use medium to be conditioned according to realistic driving profiles using the means for variable distribution and, if necessary, the means for additional conditioning and/or the means for influencing the flow.

6. The device according to any of claims 1 to 5, **characterized in that** the conditioning means comprises a heating and/or cooling means (5) for the cooling medium.

## Revendications

1. Dispositif permettant d'alimenter un moteur à combustion interne sur un banc d'essai avec au moins un milieu utile fluide, conditionné, en particulier refroidi, par exemple de l'air de combustion ou de l'air de suralimentation, comportant au moins un refroidisseur (2), monté en amont du moteur à combustion interne (1), pour le milieu utile respectif, le refroidisseur (2) étant réalisé sous forme d'échangeur de chaleur qui fonctionne avec un réfrigérant gazeux, **caractérisé en ce que** le réfrigérant est acheminé jusqu'au refroidisseur par le biais d'un dispositif de conditionnement pour le réfrigérant, le dispositif de conditionnement comprenant un échangeur de chaleur (3), un dispositif de réglage dynamique servant au réglage du débit volumique ou massique (6) du réfrigérant et un ventilateur (4) pour le réfrigérant.

2. Dispositif selon la revendication 1, **caractérisé en ce que** le dispositif de réglage dynamique (6) est formé par une buse Venturi à section transversale réglable.

3. Dispositif selon la revendication 2, **caractérisé en ce qu'**un piston de réglage (7) déplaçable dans la direction axiale est prévu dans la buse Venturi.

4. Dispositif selon l'une des revendications 1 à 3, **caractérisé en ce que** le dispositif de réglage (6) est accouplé à un système de régulation qui effectue le réglage du débit volumique ou massique du réfrigérant sur la base d'un champ caractéristique.

5. Dispositif selon la revendication 4, **caractérisé en ce que** des séquences sont mémorisées dans le système de régulation, lesquelles provoquent un conditionnement du milieu utile conformément à des profils de conduite réalistes au moyen du dispositif de répartition variable, au besoin également en incluant le dispositif de conditionnement supplémentaire et/ou le dispositif servant à influencer l'écoulement.

6. Dispositif selon l'une des revendications 1 à 5, **caractérisé en ce que** le dispositif de conditionnement comprend un dispositif de chauffage et/ou de refroidissement (5) pour le réfrigérant.
